(19)

Europäisches Patentamt

European Patent Office

Office européen des brevets

(11) **EP 4 760 093 A1**

(12) **EUROPEAN PATENT APPLICATION**

(43) Date of publication:
17.06.2026 Bulletin 2026/25

(21) Application number: 24219341.5

(22) Date of filing: 12.12.2024

(51) International Patent Classification (IPC):
*F03D 17/00* (2016.01)

(52) Cooperative Patent Classification (CPC):
**F03D 17/0065; F05B 2260/84**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: Wobben Properties GmbH
26607 Aurich (DE)

(72) Inventors:
- **Barroso, Fernando
26607 Aurich (DE)**
- **Boesch, Gilles
26607 Aurich (DE)**
- **Iwwerks, Marvin
26607 Aurich (DE)**

(74) Representative: **Eisenführ Speiser
Patentanwälte Rechtsanwälte PartGmbB
Gollierstraße 4
80339 München (DE)**

(54) **METHOD FOR EVALUATING A PERFORMANCE OF A WIND TURBINE**

(57) The invention provides a method for evaluating a performance of a wind turbine, a computer program, a training data set and a performance evaluation system comprising inter alia the following steps: clustering a plurality of wind turbines with a trained machine learning algorithm into a plurality of clusters of wind turbines, acquiring the at least one site specific parameter for the wind turbine, identifying a specific cluster from the plurality of clusters with comparable conditions to the wind turbine based on the at least one site specific parameter of the wind turbines comprised in the specific cluster and the at least one site specific parameter of the wind turbine, determining a cluster performance index of the specific cluster based on the at least one power production parameter of the wind turbines comprised in the specific cluster, evaluating the performance of the wind turbine.

EP 4 760 093 A1

Fig. 3

**Description**

The invention relates to a method for evaluating a performance of a wind turbine, a computer program and a training data set.

Wind turbines are known. They provide a popular source for green, sustainable power production. For this, wind turbines are often arranged in wind farms comprising a plurality of wind turbines. Apart from these power-plant-like assemblies in wind farms, wind turbines provide also the possibility to evolve from a centralized energy supply that requires long power lines to reach all inhabited regions, to a more decentralized energy supply. For example, only a few wind turbines suffice to supply small villages or towns, that when located next to the small village or town make long power lines obsolete.

In order to plan reliable power supply with wind turbines, the power production of a wind turbine has to be reliable. A parameter to monitor the power production of a wind turbine is the Annual Energy Production, AEP. This performance indicator provides a summary of the power produced by the wind turbine over the range of one year. In specific, a plurality of power curves, that each describe the actual power output of the wind turbine at a different time, are summarized in the AEP.

Deviations in these power curves may temporarily affect the power supply, which in an above described decentralized energy supply may cause undesired blackouts. Therefore, persistent power curves of a wind turbine and a good performance of the wind turbine are desirable.

In wind farms, the individual performance of each wind turbine can be easily determined by comparing it to the performance of the other wind turbines. Since all wind turbines of a wind farm operate under the same conditions, besides wake effects, underperforming wind turbines may be easily detected. However, regarding locations where only a few wind turbines, in specific only one wind turbine, or several wind turbines with different configurations are arranged, the detection of an underperforming wind turbine is more difficult since there are no other similar wind turbines to compare to.

Against this background, the present invention was faced with the task to provide means to reliably detect underperforming wind turbines, in specific, underperforming wind turbines that are not part of a wind farm.

According to a first aspect of the invention, a method for evaluating a performance of a wind turbine is provided, comprising the following steps: acquiring at least one power production parameter and at least one site specific parameter for each of a plurality of wind turbines for each of a plurality of days, preparing a dataset based on the acquired parameters, training a machine learning algorithm to cluster the plurality of wind turbines into a plurality of clusters of wind turbines with comparable conditions based on the dataset, in specific based on the at least one site specific parameter, each of the plurality of clusters of wind turbines comprising at least two wind turbines, clustering the plurality of wind turbines with the trained machine learning algorithm into a plurality of clusters of wind turbines, acquiring the at least one site specific parameter for the wind turbine, identifying a specific cluster from the plurality of clusters with comparable conditions to the wind turbine based on the at least one site specific parameter of the wind turbines comprised in the specific cluster and the at least one site specific parameter of the wind turbine, determining a cluster performance index of the specific cluster based on the at least one power production parameter of the wind turbines comprised in the specific cluster, acquiring the at least one power production parameter of the wind turbine and determining a wind turbine performance index of the wind turbine based on the at least one power production parameter of the wind turbine, evaluating the performance of the wind turbine by comparing the wind turbine performance index of the wind turbine to the cluster performance index of the specific cluster.

The method may, for example, be executed by one or more computers that comprise in specific one or more input interfaces to receive data directly or indirectly from one or more wind turbines, preferably sensor data measured by real physical sensor arranged at the one or more wind turbines.

The step of acquiring at least one power production parameter and at least one site specific parameter for each of a plurality of wind turbines for each of a plurality of days comprises for example receiving and/or determining and/or looking up and/or selecting and/or reading from a memory at least one power production parameter and at least one site specific parameter for each of a plurality of wind turbines for each of a plurality of days.

A power production parameter is a parameter that indicates the power production of a wind turbine, for example a mean power production over one or more hours or a day. A site specific parameter indicates conditions the wind turbine is faced with at the site of the wind turbine that is the location, where the wind turbine is arranged.

Preferably, at least one power production parameter is acquired for every mode, the wind turbine is operated with. These modes may for example be a power optimized mode and/or a noise optimized mode and/or a safety optimized mode that prevents the wind turbine from taking damage, for example due to extensive loads acting on the wind turbine.

The at least one power production parameter and at least one site specific parameter is acquired for each of the plurality of wind turbines for each of a plurality of days in order to provide data that represents the real conditions each of the wind turbines are operated in. If data from only one day is acquired, the data may be misleading, since on this day extraordinary conditions could have occurred. By acquiring data from a plurality of days, that means at least 3 days, the likeliness of extraordinary conditions is reduced and the reliability and truthfulness of the data increased.

Preferably, data covering the last year, more preferably the last two years of operation of each of the plurality of wind turbines is acquired.

The step of preparing a dataset based on the acquired parameters comprises, for example, summarizing and/or sorting and/or converting data of the acquired parameters in order to provide a dataset based on which a machine learning algorithm may be trained successfully.

Preferably, data from a wind turbine is added to the dataset for each mode the wind turbine is operated in, for which data is available. For example, a wind turbine running in power optimized mode during day and noise optimized mode during night is preferably input into the dataset as two independent turbines: One with the operating characteristics of the power optimized mode, and one with the operating characteristics of the noise optimized mode.

The step of preparing a dataset preferably comprises steps like for example preprocessing data and/or a principal component analysis and/or optimization of the dataset based on for example the principal component analysis.

The step of training a machine learning algorithm to cluster the plurality of wind turbines into a plurality of clusters of wind turbines with comparable conditions based on the dataset, in specific based on the at least one site specific parameter, each of the plurality of clusters of wind turbines comprising at least two wind turbines, comprises the steps of acquiring an untrained machine learning algorithm, providing a trained machine learning algorithm and preferably additional other steps like storing the trained machine learning algorithm in a memory.

A machine learning, ML, algorithm is a set of rules and/or processes used by an artificial intelligence, AI, system to conduct tasks, for example to discover new data insights and patterns, or to predict output values from a given set of input variables. Algorithms enable machine learning to learn.

The training of a machine learning algorithm may for example be described by the following: A paper from UC Berkeley breaks out the learning system of a machine learning algorithm into three main parts.

1) A decision process: In general, machine learning algorithms are used to make a prediction or classification. Based on some input data, which can be labeled or unlabeled, the algorithm will produce an estimate about a pattern in the data.

2) An error function: An error function evaluates the prediction of the model underlying the machine learning algorithm. If there are known examples, an error function can make a comparison to assess the accuracy of the model.

3) A model optimization process: If the model can fit better to the data points in the training set, then weights are adjusted to reduce the discrepancy between the known example and the model estimate. The algorithm will repeat this "evaluate and optimize" process, updating weights autonomously until a threshold of accuracy has been met.

Supervised learning in particular uses a training set to teach models to yield the desired output. This training dataset includes inputs and correct outputs, which enables the model to learn overtime. The algorithm measures its accuracy through the loss function, adjusting until the error has been sufficiently minimized.

Unlike supervised learning, unsupervised learning uses unlabeled data. From that data, the algorithm discovers patterns that help solve clustering or association problems. This is particularly useful when subject matter experts are unsure of common properties within a data set.

The trained ML algorithm provided by a method according to the invention is able to cluster the plurality of wind turbines into a plurality of clusters of wind turbines with comparable conditions. Based on the dataset and in specific based on the at least one site specific parameter, the comparable conditions of wind turbines comprised in one cluster may for example be a comparable, in specific same, wind speed, in specific average wind speed, and/or turbulence intensity, in specific average turbulence intensity, and/or wind shear, in specific average wind share, and/or air density and/or humidity, in specific average rain/snow fall, at the respective sites of the wind turbines.

Since the dataset preferably comprises different data of a wind turbine relating to different operating modes of the wind turbine as independent wind turbines, it is possible that data from one wind turbine appears in different clusters, in other words that a wind turbine may be assigned to more than one cluster depending on the number of operating modes for which data is present in the dataset. Like this, each clusters will be formed by similar wind turbines running similar operating modes, creating a more representative group of wind turbines. This will improve the comparison of wind turbines to the clusters.

In an embodiment, different clusters of wind turbines may for example be:

- wind turbines operated close to sea level in maritime climate with a power optimized mode,

- wind turbines operated close to inhabited regions in continental climate with a noise optimized mode,

- wind turbines operated in very wind turbulent regions near mountains operated in safety optimized modes to prevent damage to the wind turbine,

- wind turbines operated in remote dry regions,

- wind turbines operated in forests,

- wind turbines operated in very cold regions faced with challenges regarding icing of rotor blades operated in safety optimized modes.

However, these are very simplified examples in order to explain the intention behind the clustering of wind turbines. A clustering performed by a trained ML algorithm according to a method according to the invention is expected to provide much more complex cluster structures.

The step of clustering the plurality of wind turbines with the trained machine learning algorithm into a plurality of clusters of wind turbines comprises the step of providing the trained ML algorithm with data of the plurality of wind turbines, preferably the at least one power production parameter and at least one site specific parameter for each of a plurality of wind turbines for each of a plurality of days, as input, and the step of providing, by the trained ML algorithm, a plurality of clusters of wind turbines with comparable conditions as output.

Preferably, the input of the trained ML algorithm is the at least one power production parameter and at least one site specific parameter for each of a plurality of wind turbines for each of a plurality of days. Alternatively, the input may also be the dataset prepared based on the acquired parameters in a previous step of a method according to the invention.

The step of acquiring the at least one site specific parameter for the wind turbine comprises for example receiving and/or determining and/or looking up and/or selecting and/or reading from a memory at least one site specific parameter for the wind turbine. The wind turbine is thereby the wind turbine which performance is to be evaluated by the method according to the invention.

The step of identifying a specific cluster from the plurality of clusters with comparable conditions to the wind turbine based on the at least one site specific parameter of the wind turbines comprised in the specific cluster and the at least one site specific parameter of the wind turbine, comprises for example comparing the at least one site specific parameter of the wind turbine to the at least one site specific parameter of the wind turbines comprised in a specific cluster, in specific for every cluster of the plurality of clusters, and determining a specific cluster, which at least one site specific parameter of the wind turbines comprised in the cluster matches the at least one site specific parameter of the wind turbine best. The best matching at least one site specific parameter of the wind turbines of a cluster indicates comparable conditions at the site of the wind turbines.

The above step of identifying a specific cluster is preferably executed by a trained machine learning algorithm.

The step of determining a cluster performance index of the specific cluster based on the at least one power production parameter of the wind turbines comprised in the specific cluster, comprises for example calculating and/or looking up and/or selecting and/or reading from a memory a cluster performance index of the specific cluster based on the at least one power production parameter of the wind turbines comprised in the specific cluster. The cluster performance index is a parameter that indicates for example a mean power production of the wind turbines of a cluster based on the at least one power production parameter of the wind turbines.

In an embodiment, a cluster performance index of a cluster, in specific the specific cluster, is for example determined in the following steps:

  1. Create a bin averaged wind speed vs power curve for each wind turbine in the cluster;

  2. Normalize the binned power curve by dividing the average power by the wind turbine maximum operating power;

  3. Bin average all the cluster wind turbine normalized curve, obtaining a cluster average power curve;

  4. Calculate the AEP for the cluster average power curve as cluster average annual energy production ($AEP_r$);

  5. Store the model, in specific the $AEP_r$, for future performance comparison with the wind turbines of the cluster.

In this example, the average wind speed is acquired as site specific parameter and the power curve is acquired as or determined based on the power production parameter of each of the plurality of wind turbines. The $AEP_r$ is in this example the performance index of the cluster.

The step of acquiring the at least one power production parameter of the wind turbine and determining a wind turbine performance index of the wind turbine based on the at least one power production parameter of the wind turbine, comprises for example receiving and/or determining and/or looking up and/or selecting and/or reading from a memory the at least one power production parameter of the wind turbine and for example calculating and/or looking up and/or selecting and/or reading from a memory a wind turbine performance index of the wind turbine based on the at least one power production parameter of the wind turbine. The wind turbine performance index is a parameter that indicates for example a mean power production of the wind turbine based on the at least one power production parameter of the wind turbine.

In an embodiment, a wind turbine performance index of the wind turbine is for example determined in the following steps:

1. Calculate a binned power curve for the wind turbine for a specific time range defined by the acquired data;

2. Calculate the AEP for the binned power curve of the wind turbine ($AEP_m$);

3. Calculate the performance ratio (PR) of the wind turbine annual energy production $AEP_m$ compared to the cluster average annual energy production $AEP_r$ ($AEP_m$ / $AEP_r$);

In this example the binned power curve is calculated based on the at least one power production parameter acquired for the wind turbine and the $AEP_m$ is the wind turbine performance index.

The third step of calculating the performance ratio (PR) of the wind turbine annual energy production $AEP_m$ compared to the cluster average annual energy production $AEP_r$, is an example for an embodiment of the step of evaluating the performance of the wind turbine by comparing the wind turbine performance index of the wind turbine to the cluster performance index of the specific cluster of a method according to the invention.

The step of evaluating the performance of the wind turbine by comparing the wind turbine performance index of the wind turbine to the cluster performance index of the specific cluster, comprises for example determining which of the wind turbine performance index and the cluster performance index has a higher value, in specific, determining a difference between the wind turbine performance index and the cluster performance index. Preferably, the evaluating step is performed based on such a determination. If the wind turbine performance index is higher than the cluster performance index, the performance of the wind turbine is for example evaluated as very good or above average. In case the wind turbine performance index is lower than the cluster performance index, the performance of the wind turbine is for example evaluated as low or below average. Preferably, the evaluation is based on a difference between both performance indices. Even more preferably, thresholds in this difference are defined. These threshold define for example for which values of the difference between the both performance indices the performance of the wind turbine is evaluated as for example very good, good, average, low, very low.

In an embodiment, the invention provides a method for evaluating the performance of a wind turbine comprising the following steps: Acquiring the at least one site specific parameter for the wind turbine, Acquiring a plurality of clusters of wind turbines that were clustered by a machine leaning algorithm trained according to the first aspect of the invention, Identifying a specific cluster from the plurality of clusters with comparable conditions to the wind turbine based on the at least one site specific parameter of the wind turbines comprised in the specific cluster and the at least one site specific parameter of the wind turbine, Determining a cluster performance index of the specific cluster based on the at least one power production parameter of the wind turbines comprised in the specific cluster, Acquiring the at least one power production parameter of the wind turbine and determining a wind turbine performance index of the wind turbine based on the at least one power production parameter of the wind turbine, Evaluating the performance of the wind turbine by comparing the wind turbine performance index of the wind turbine to the cluster performance index of the specific cluster.

In this embodiment, the method steps are repeatedly executed, in specific with different values for the at least one site specific parameter referring to different wind turbines and different values for the at least one power production parameter referring to different wind turbines, without repeating the steps of training the machine learning algorithm and clustering the plurality of wind turbines with the trained machine learning algorithm into a plurality of clusters of wind turbines. For example, the performance of two or more different wind turbines with different values for the at least one site specific parameter and/or the at least one power performance parameter may be evaluated without retraining and reclustering in between. The invention therefore also refers to methods that evaluate the performance of a wind turbine based on acquired clusters of wind turbines that were previously clustered by a trained ML algorithm.

Preferably, the clustering of the plurality of wind turbines by the trained ML algorithm is repeated every year, preferably every 6 months, even more preferably every 3 months, most preferably every month.

In an advantageous embodiment of an aspect of the invention, the machine learning algorithm is an unsupervised machine learning algorithm.

Unlike supervised ML algorithms are advantageous when dealing with unlabeled data. From that data, the unsupervised ML algorithm, in contrast to other ML algorithms, is able to discover patterns that help solve clustering or association problems. This is particularly useful when subject matter experts are unsure of common properties within a data set, which is the case in this clustering of wind turbines. The unsupervised ML algorithm therefore provides a tool to find correlations and patterns among the plurality of wind turbines that would remain hidden for an expert. These optimized clusters enable an optimized comparison of the wind turbine to be evaluated to the plurality of wind turbines.

An unsupervised ML algorithm is therefore beneficial regarding the underlying task of the present invention.

In a preferred variation of the above embodiment, the machine learning algorithm is one of a k-means algorithm, a density based spatial clustering of applications with noise, an agglomerative clustering, and a bisecting k-means algorithm.

K-means is a partitioning clustering method as an example for clustering methods. This identifies groups within data without labels into different clusters by finding groups of data which are similar to one another. The name "k-means" come from the $k$ centroids that it uses to define clusters. A point is assigned to a particular cluster if it is closer to that cluster's centroid than any other centroid. The k-means algorithm forms $k \in \mathbb{N}$ cluster and is defined for example as:

1. Select $k$ data points at random as cluster centre $c_i$, $i = 0, ..., k$.

2. While data points change cluster:

    a. For every data point, calculate the distance to every cluster centre.

    b. Assign the data point to the cluster with the nearest centre.

    c. Calculate new cluster centre $c_i$ for every cluster, taking the mean value of every feature.

A DBSCAN Algorithm (Density Based Spatial Clustering of Applications with Noise) is a density based clustering algorithm. It calculates the clusters according to the density of the data points and does not take the number of clusters as a parameter. Instead, it uses the distance around a point and the radius $\varepsilon \in \mathbb{R}^+$, to determine if two points are in a neighbourhood. It also uses the number of data points in this neighbourhood to determine if a data point is a core point of a cluster or not. To set the distance parameter $\varepsilon$ and the minimum samples ($minPoints \in \mathbb{N}$) in the neighbourhood $n$ is not easy and it is needed to analyse the data beforehand to set these parameters.

The DBSCAN Algorithm is defined for example as:

1. Set all data points as unlabelled.

2. Cluster ID $c_i, i = 0, ...$

3. For all $x \in dataset$:

    a. If $x$ unlabelled:

        i. $set = \{y \in dataset | dist(x,y) \leq \varepsilon\}$.

        ii. If $|set| \leq \min Points$ labelled $x$ as noise: $c_i = -1$.

        iii. Else, label all $y \in set$ with $c_i$.

            1. For all $y \in set$:

                a. $set_2 = \{z \in dataset | dist(x,y) \leq \varepsilon\}$.

                b. If $|set_2| \geq minPoints$:

                    i. For all $z \in set_2$:

                        1. If $z$ unlabelled add to $set$ and label with $c_i$.

            2. $i = i + 1$.

The Agglomerative Clustering algorithm is a hierarchical clustering algorithm. Hierarchical clustering groups data into a tree of clusters. Hierarchical clustering begins by treating every data point as a separate cluster. Then, it repeatedly executes these steps: 1) identify the two clusters which can be closest together, and 2) merge the two maximum comparable clusters. These steps continue until all the clusters are merged together. Agglomerative Clustering uses a bottom up approach to fuse data points to larger clusters. It begins to set every data point into its own cluster and then combines cluster that are close together.

The Agglomerative Clustering algorithm is defined for example for a dataset with *n* data points as:

1. Assign every data point to its own cluster $c_i \in C$, Number of cluster: *n*

2. While $n \geq k$:

a. $\forall\, c_i \in C$, calculate the distance to every cluster.

b. Merge the two cluster with the smallest distances.

c. $n = n - 1$.

It can use four different approaches to calculate the distance between the clusters: average linkage, complete linkage, single linkage and ward. Average linkage uses the average distance between the data points of the clusters. Complete linkage uses the greatest distance between two points of the cluster. Single linkage uses the smallest distance between two points of the cluster. Ward uses the variance inside a cluster to determine which fusion of the cluster increases the variance the less.

A bisecting k-means algorithm is another hierarchical algorithm, it uses the method of hierarchical clustering and the k-means algorithm. It progressively splits one cluster into two until a set number of clusters $k \in \mathbb{N}$ is reached. The bisecting k-means has for example two different strategies in the SKLearn library:

1. Largest Cluster: Selects the cluster with the most points to split.

2. Biggest Inertia: Selects the cluster with the biggest sum of squared errors within.

To get cluster of similar size it is better to pick the largest cluster strategy, it also is faster than the second strategy, because it only takes the size of the cluster into account. The bisecting k-means algorithm is defined for example as:

1. While number of cluster $n < k$

a. Select a parent cluster *C* selected by strategy.
b. Split *C* into $C_1$ and $C_2$ using k-means.

In a further advantageous embodiment of an aspect of the invention, the at least one site specific parameter comprises information about at least one of: a site height, a wind distribution at a site, an average air density at a site, an average temperature at a site, and an average turbulence intensity at a site.

The site height is for example the height of the location at which the wind turbine is arranged above sea level. Alternatively the site height is for example defined as the height of the nacelle of the wind turbine above sea level. The wind distribution comprises for example different wind directions and/or different wind speeds and/or different wind shear that occur at the site.

In a further advantageous embodiment of an aspect of the invention, the step of training the machine learning algorithm comprises the step of: optimizing a cluster size of the plurality of clusters of wind turbines.

The cluster size is important for the ML algorithm, for example for the calculation of model power curves, to ensure that an ideal behaviour of the wind turbines that are part of a cluster is represented through the mean value of the power curves. The three algorithms k-means, agglomerative clustering and bisecting k-means for example take the amount of cluster as a parameter, the DBSCAN algorithm, takes minimal samples and the radius as parameter.

In an embodiment, for each algorithm, the amount of cluster and minimal samples is, for example, trained for 2 to 46 cluster. In addition different distance functions, Euclidean, Manhattan and Cosine distance, are used in this embodiment to calculate the cluster.

In a further advantageous embodiment of an aspect of the invention, the method further comprises the step of: evaluating the clusters of wind turbines generated by the machine learning algorithm, and repeating the step of training the machine learning algorithm until the clusters of wind turbines generated by the machine learning algorithm satisfy predetermined requirements.

In specific, these steps are comprised in the step of training the ML algorithm. In this case the step of repeating the step of training the ML algorithm is replaced by a step of repeating generating the plurality of clusters of wind turbines.

The step of evaluating the clusters of wind turbines comprises for example a comparison of the clusters with the predetermined requirements. In case the clusters do not satisfy the predetermined requirements, the step of repeating the step of training the ML algorithm is executed.

The predetermined requirements are for example requirements regarding cluster size and/or threshold of other optimization parameters.

In a further advantageous embodiment of an aspect of the invention, the step of evaluating the performance of the wind turbine by comparing the wind turbine performance index of the wind turbine to the cluster performance index of the specific cluster comprises the step of: determining a variation of the wind turbine performance index of the wind turbine to the cluster performance index of the specific cluster.

The step of determining a variation of the wind turbine performance index of the wind turbine to the cluster performance index of the specific cluster comprises for example calculating and/or looking up and/or selecting and/or reading from a memory a variation of the wind turbine performance index of the wind turbine to the cluster performance index of the specific cluster. In case the variation is calculated, the calculation is for example a subtraction.

In a preferred variation of the above embodiment, the method further comprises the step of: generating a signal, in specific a flag or an alarm, if the variation of the wind turbine performance index of the wind turbine to the cluster performance index of the specific cluster is higher than a predetermined threshold value.

The predetermined threshold value is a threshold value for the determined variation of the wind turbine performance index of the wind turbine to the cluster performance index of the specific cluster. For example, if the variation is determined as a subtraction of the wind turbine performance index of the wind turbine from the cluster performance index of the specific cluster, a predetermined threshold value of 0 would cause the generation of a signal if the wind turbine performance index of the wind turbine deviates from the cluster performance index of the specific cluster. Preferably, different flags are generated dependent on whether the variation is positive, that is when the wind turbine performance index of the wind turbine is lower than the cluster performance index, or negative, that is when the wind turbine performance index of the wind turbine is higher than the cluster performance index. Better performance of the wind turbine is good and in some exemplary embodiments there is then no need for an alarm, while a low performance of a wind turbine is undesirable and therefore to be monitored and preferably generates an alarm.

The predetermined threshold value is for example set as a fixed value or as a percentage value of the respective cluster performance index. Alternatively, the predetermined threshold value is set as a function that determines a threshold value for the specific cluster.

In an example of this preferred variation of the above embodiment these steps are implemented as:

1. Calculate performance ratio statistics for the selected group, so thresholds can be calculated. Thresholds are defined by two methods:

    a. Fixed Method

    b. Tuckey's Method

2. Evaluate the threshold exceedances and create Boolean columns with the results:

    a. If the threshold is exceeded set it to True, else;

    b. Set it to False

3. For each threshold limit flag, create a counter that, with the ascending ordered data of each wind turbine:

    a. For each True value, increase the counter by 1;

    b. For each False value, decrease the counter by 1;

    c. If the counter is < 0, it shall remain 0.

4. When the counter exceeds 10, an alert shall be generated.

In the above example, a second threshold is predetermined as threshold for the amount of flags set by the step of generating a signal, in this example generating a flag. This second predetermined threshold is 10 in this example. An alarm is then generated, when the number of successively generated True flags is greater than the second predetermined threshold.

With the counting operation of the above example, alerts are created for performance deviating wind turbines. In this example an exceedance of the thresholds of at least 10 days is necessary to generate an alert. Ensuring that the counter isn't smaller than 0 makes the system equally reactive even after a long period of normal operation.

In a further preferred variation of the above embodiment, the predetermined threshold value is a cluster dependent threshold value that is preset for each of the plurality of clusters of wind turbines as a function, in specific as a specific percentage, preferably 5 %, of a cluster performance index of the respective cluster.

For example, with a 5 % cluster dependent threshold value, a signal is generated if the wind turbine performance index of the wind turbine deviates from the cluster performance index by 5 % of the cluster performance index. Besides a flat value of for example, 10 % or 7 % or 5 % or 3 % or 1 % of the cluster performance index, the cluster dependent threshold value may also be defined as another function of the cluster performance index, for example as a percentage value of the cluster performance index like above, however the percentage value shifts depending on the cluster performance value, in specific decreases, with increasing cluster performance value.

In a further advantageous embodiment of an aspect of the invention, the method further comprises the steps of: acquiring at least one configuration parameter of each of the plurality of wind turbines for each of the plurality of days, training a machine learning algorithm to cluster the plurality of wind turbines into a plurality of clusters of wind turbines with comparable conditions based on at least the at least one configuration parameter, each of the plurality of clusters of wind turbines comprising at least two wind turbines, clustering the plurality of wind turbines with the trained machine learning algorithm into a plurality of clusters of wind turbines, acquiring the at least one configuration parameter for the wind turbine, Identifying a specific cluster from the plurality of clusters with comparable conditions to the wind turbine based on the at least one configuration parameter of the wind turbines comprised in the specific cluster and the at least one configuration parameter of the wind turbine.

In this embodiment a method is describes that uses at least one configuration parameter of the wind turbines analogous to the above at least one site specific parameter in addition to the at least one site specific parameter. The training step and the clustering step are thus preferably performed considering the at least one site specific parameter and the at least one configuration parameter of the wind turbines. In other words, the at least one configuration parameter adds at least one dimension to the dataset, the training of the ML algorithm and the clustering. The clustering of the wind turbines is thus more detailed, since not only site conditions of the wind turbines are considered but also configurations. In a simplified example, a cluster comprising wind turbines with comparable conditions at the sites is split into two or more clusters according to comparable configurations of the wind turbines, clustering all wind turbines with comparable site conditions and comparable configurations in new, smaller clusters. This improves the accuracy of the comparison of the wind turbine with a cluster.

Even though the steps of acquiring, training, clustering, acquiring and identifying regarding the at least one configuration parameter are written separately from the respective steps regarding the at least one site specific parameter, they are in an alternative embodiment comprised in the respective steps regarding the at least one site specific parameter. These steps are then taking into account both, the at least one site specific parameter and the at least one configuration parameter. In this case, there is for example only one training step in a method according to the invention in this embodiment that considers the at least one site specific parameter as well as the one configuration parameter. Preferably, the ML algorithm is trained based on the at least one site specific parameter and the one configuration parameter in one step, not trained first based on the site specific parameter, then afterwards trained based on the configuration parameter. However, this is also not excluded from the scope of the invention since the second training can be implemented to not reverse or worsen the learning of the ML algorithm from the first training.

In a preferred variation of the above embodiment, the at least one configuration parameter comprises information about at least one of: a model type of a tower of the wind turbine, a model type of at least one rotor blade of the wind turbine, a control system type of the wind turbine. A model type of a tower of the wind turbine comprises for example information about the height and/or width of the tower. A model type of at least one rotor blade comprises for example information on the length and/or thickness and/or aerodynamic profile and/or configuration, in specific one part or multiple part, of at least one, preferably all rotor blades of the wind turbine. A control system type comprises for example information about the modes the wind turbine is operated in, functions of the wind turbine, in specific pitch functions, and/or simulation and/or adaptation tools of the wind turbine.

Preferably, also aerodynamic attachments to the wind turbine, as for example serrations or vortex generators or flaps are considered in the at least one configuration parameter.

Considering at least one configuration parameter besides at least one site specific parameter increases the accuracy of clustering wind turbines with comparable conditions and improves the comparison of the wind turbine with the specific cluster.

In a further advantageous embodiment of an aspect of the invention, the cluster performance index is an annual cluster performance index, in specific, providing information about a mean annual energy production, AEP, of the wind turbines comprised in a cluster, and the wind turbine performance index is an annual wind turbine performance index, in specific, providing information about an AEP of the wind turbine.

Preferably, the annual cluster performance index is based on data covering one year of operation of the wind turbines comprised in the cluster and the annual wind turbine performance index is based on data covering one year of operation of the wind turbine. Alternatively data from shorter operation periods of the wind turbines comprised in a cluster and/or the wind turbine is extrapolated to one year to get the annual cluster performance index and/or the annual wind turbine performance index, respectively.

An annual wind turbine performance index and an annual cluster performance index has the advantage that potential deviations in the site conditions of the wind turbines, for example due to climate and/or weather events, for example seasons, preferably summer and winter, and/or for example storms, dries and/or extreme temperatures, are considered. In case of extrapolated annual performance indices, the longer the period during which the data was collected, the better, since it becomes more likely to record potential deviations in the site conditions.

According to a further aspect of the invention, a computer program to be carried out by a computer is provided that when carried out by a computer is configured to perform a method according to the first aspect of the invention.

For this, the computer program preferably comprises functions to acquire data from servers and/or memories and/or sensors, in specific directly from one or more wind turbines. The computer program preferably comprises functions to generate signals to one or more displays and/or one or more sound generating means.

According to a further aspect of the invention, a training data set for training a machine learning algorithm to cluster a plurality of wind turbines into a plurality of clusters of wind turbines with comparable conditions based on the training dataset, in specific based on at least one site specific parameter, each of the plurality of clusters of wind turbines comprising at least two wind turbines is provided, wherein the training data set comprises data on each of the plurality of wind turbines, in specific data comprising the at least one site specific parameter for each of the plurality of wind turbines.

Preferably, this training data set results from the step of preparing a dataset based on the acquired parameters according to the first aspect of the invention.

According to a further aspect of the invention, a performance evaluation system for evaluating the performance of a wind turbine is provided, comprising: a first acquisition unit configured to acquire at least one power production parameter and at least one site specific parameter for each of a plurality of wind turbines for each of a plurality of days, a preparation unit configured to prepare a dataset based on the parameters, acquired by the first acquisition unit, a training unit configured to train a machine learning algorithm to cluster the plurality of wind turbines into a plurality of clusters of wind turbines with comparable conditions based on the dataset, in specific based on the at least one site specific parameter, each of the plurality of clusters of wind turbines comprising at least two wind turbines, a cluster unit configured to cluster the plurality of wind turbines with the trained machine learning algorithm into a plurality of clusters of wind turbines, a second acquisition unit configured to acquire the at least one site specific parameter for the wind turbine, an identification unit configured to identify a specific cluster from the plurality of clusters with comparable conditions to the wind turbine based on the at least one site specific parameter of the wind turbines comprised in the specific cluster and the at least one site specific parameter of the wind turbine, a first determination unit configured to determine a cluster performance index of the specific cluster based on the at least one power production parameter of the wind turbines comprised in the specific cluster, a third acquisition unit configured to acquire the at least one power production parameter of the wind turbine, a second determination unit configured to determine a wind turbine performance index of the wind turbine based on the at least one power production parameter of the wind turbine, an evaluation unit configured to evaluate the performance of the wind turbine by comparing the wind turbine performance index of the wind turbine to the cluster performance index of the specific cluster.

The specification, embodiments, effects and examples of a method according to the first aspect of the invention also apply to the respective units of the performance evaluation system. In case in some embodiments of such a method, a method step is described that cannot be executed by an above unit, the performance evaluation system comprises one or more additional units configured to perform the respective steps.

In an embodiment of the above aspect of the invention, one acquisition unit is configured to perform the tasks of the above first acquisition unit, the second acquisition unit and the third acquisition unit. Likewise, in an embodiment, the first determination unit and the second determination unit are combined in one determination unit.

The performance evaluation system preferably comprises one or more interface to receive and send data, in specific receive data from a server and/or a memory and/or one or more wind turbines, preferably one or more sensors of one or more wind turbines.

Features of preferred embodiments of the invention are defined, in particular, in the dependent claims, while further advantageous features, embodiments and implementations are apparent to the skilled person from the above explanation and the following discussion.

In the following, the present invention is further elucidated and exemplified under reference to embodiments illustrated in the attached drawings, in which

Fig. 1     shows a schematic representation of a wind turbine

Fig. 2     shows a schematic representation of a wind farm,

Fig. 3   shows a schematic flow diagram of an exemplary embodiment of a method according to the invention.

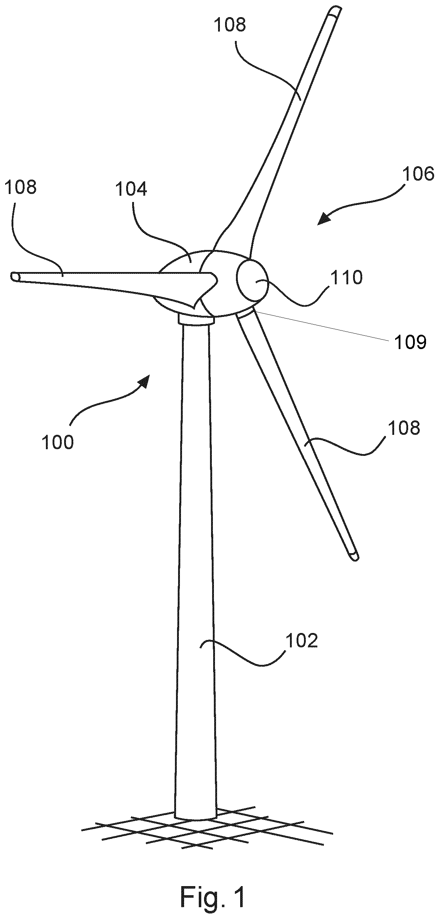

Figure 1 shows a schematic representation of a wind turbine according to the invention. The wind turbine 100 has a tower 102 and a nacelle 104 on the tower 102. An aerodynamic rotor 106 with three rotor blades 108 and a spinner 110 is provided on the nacelle 104. During operation of the wind turbine, the aerodynamic rotor 106 is set in rotation by the wind and thus also rotates an electrodynamic rotor or rotor of a generator, which is coupled directly or indirectly to the aerodynamic rotor 106. The electrical generator is arranged in the nacelle 104 and generates electrical energy. The pitch angles of the rotor blades 108 can be changed by pitch motors on the rotor blade roots 109 of the respective rotor blades 108.

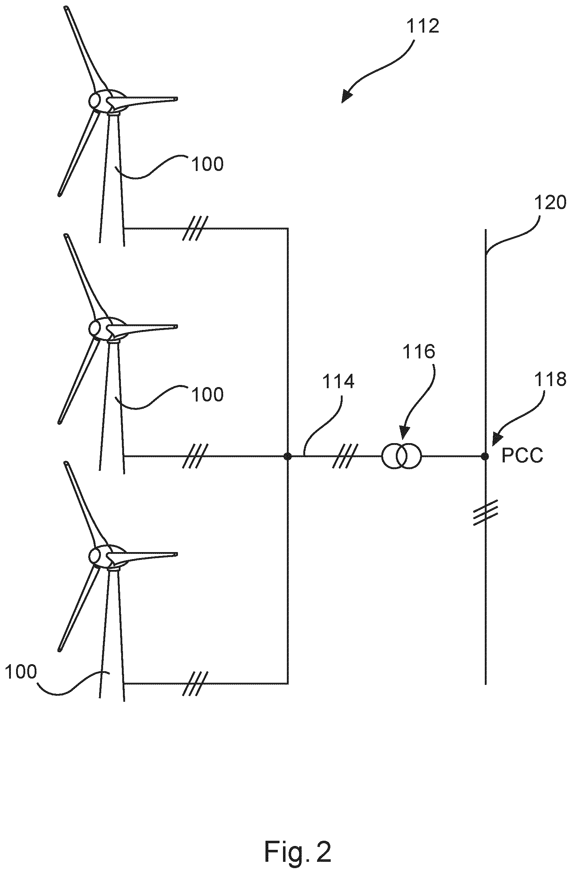

Figure 2 shows a wind farm 112 with, by way of example, three wind turbines 100, which may be identical or different. The three wind turbines 100 are thus representative of basically any number of wind turbines of a wind farm 112. The wind turbines 100 provide their power, in particular the generated power, via an electrical farm grid 114. The currents or power generated by the individual wind turbines 100 are added together and a transformer 116 is usually provided, which transforms the voltage in the park upwards in order to then feed it into the supply grid 120 at the feed-in point 118, which is also generally referred to as the PCC. Fig. 2 is only a simplified representation of a wind farm 112. For example, the farm grid 114 may be designed differently, for example by also having a transformer at the output of each wind turbine 100, to name just one other embodiment example.

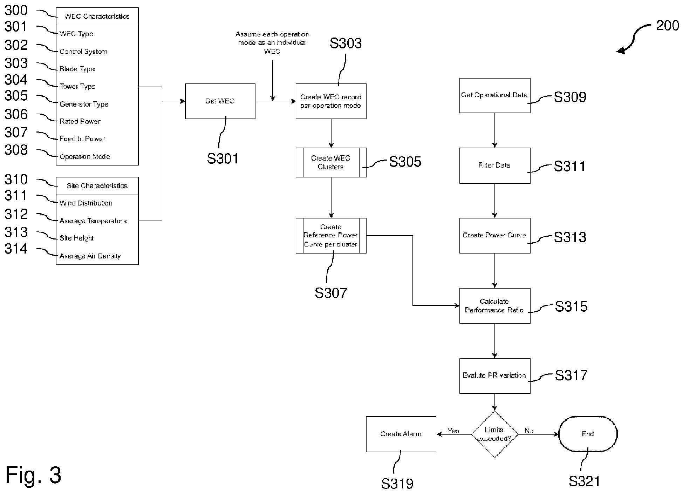

Figure 3 shows a schematic flow diagram of an exemplary embodiment of a method 200 according to the invention. In this exemplary embodiment, the method 200 acquires in a step S301 input parameters, in specific wind turbine characteristic parameters 300 and site characteristics 310 of a plurality of wind turbines.

The wind turbine characteristic parameters 300 acquired in this example are the wind turbine type 301, the control system 302 (name or type or other identification), the blade type 303 of the rotor blades of the wind turbines, the tower type 304, the generator type 305, the rated power 306, the feed in power 307 and the operation mode 308.

The site characteristic parameters 310 acquired in this example are wind distribution 311, average temperature 312, site height 313 and average air density 314. In a further step S303, a record of the acquired wind turbines is created, for example a database comprising the acquired data of the wind turbines.

In this example, each operation mode of the wind turbines is assumed as an individual wind turbine in this step. The wind turbine record therefore comprises a larger amount of wind turbines than the number of wind turbines for which data was provided as input.

In a further step S305, clusters of wind turbines with comparable conditions are created based on the wind turbine record and in specific the wind turbine characteristic parameters 300 and the site characteristic parameters 310. This step comprises the usage of a trained ML algorithm that clusters the wind turbines comprised in the wind turbine record. In specific, this step also comprises training the ML algorithm.

In a further step S307, reference power curves per cluster are created that provide information about the average power production of the wind turbines comprised in each cluster.

The further steps S309, S311, S313 may be executed before, parallel to, or after the steps S301, S303, S305 and S307.

In a step S309 the operational data of a wind turbine to be evaluated are acquired. For a good evaluation, the parameters acquired for the wind turbines should be the same as the parameters acquired for the plurality of wind turbines. Alternatively the input parameters of the plurality of wind turbines could be derived from the input parameters of the wind turbine in order to improve the identification of a specific cluster for the wind turbine.

This is done for example in a further step S311 that filters the data acquired for the wind turbine to derive parameters needed for sorting the wind turbine to a specific cluster, preferably parameter values for the parameters that were acquired as input parameters for the plurality of wind turbines. In this step S311 or in a further step, a specific cluster is identified for the wind turbine with comparable conditions, based in specific on the wind turbine characteristic parameters 300 and the site characteristic parameters 310 as well as the filter data that is provided by filtering the data.

In a further step S313, a power curve is determined for the wind turbine based on the filtered data and/or the operational data acquired.

In a further step S315 a performance ratio of the wind turbine is calculated based on the power curve of the wind turbine and the reference power curve of the specific cluster that was identified to have comparable conditions to the wind turbine.

In a further step S317, the performance ratio, PR, is evaluated. This step takes predetermined limits regarding the PR into account.

If one of these limits is exceeded, the method 200 generates an alarm in a next step S319.

If the limits are not exceeded, the method ends in a step S321.

Alternatively to an end, the method 200, in specific the steps S309, S311, S313, S315, S317 and potentially the steps S319 or S321 are repeated periodically.

The alarm created in step S319 is for example a notification on a display, a sound and/or a requested user interaction for example with a computer.

Reference signs

| | |
|---|---|
| 100 | wind turbine |
| 102 | tower |
| 104 | nacelle |
| 106 | rotor |
| 108 | rotor blade |
| 109 | rotor blade root |
| 110 | spinner |
| 112 | wind farm |
| 114 | farm grid |
| 116 | transformer |
| 118 | feed-in point |
| 120 | supply grid |
| 200 | method |
| 300 | wind turbine characteristic parameters |
| 301 | wind turbine type |
| 302 | control system |
| 303 | blade type |
| 304 | tower type |
| 305 | generator type |
| 306 | rated power |
| 307 | feed in power |
| 308 | operation mode |
| 310 | site characteristic parameters |
| 311 | wind distribution |
| 312 | average temperature |
| 313 | site height |
| 314 | average air density |

**Claims**

1. A method (200) for evaluating a performance of a wind turbine (100), comprising the following steps:

acquiring (S301) at least one power production parameter (306, 307) and at least one site specific parameter (311, 312, 313, 314) for each of a plurality of wind turbines for each of a plurality of days,
preparing (S303) a dataset based on the acquired parameters,
training a machine learning algorithm to cluster the plurality of wind turbines into a plurality of clusters of wind turbines with comparable conditions based on the dataset, in specific based on the at least one site specific parameter (311, 312, 313, 314), each of the plurality of clusters of wind turbines comprising at least two wind turbines,
clustering (S305) the plurality of wind turbines with the trained machine learning algorithm into a plurality of clusters of wind turbines,
acquiring (S309) the at least one site specific parameter (311, 312, 313, 314) for the wind turbine (100),
identifying a specific cluster from the plurality of clusters with comparable conditions to the wind turbine (100) based on the at least one site specific parameter (311, 312, 313, 314) of the wind turbines comprised in the specific cluster and the at least one site specific parameter (311, 312, 313, 314) of the wind turbine (100),
determining (S307) a cluster performance index of the specific cluster based on the at least one power production parameter (306, 307) of the wind turbines comprised in the specific cluster,
acquiring (S309) the at least one power production parameter (306, 307) of the wind turbine (100) and determining (S313) a wind turbine performance index of the wind turbine (100) based on the at least one power production parameter (306, 307) of the wind turbine (100),
evaluating (S315, S317) the performance of the wind turbine (100) by comparing the wind turbine performance index of the wind turbine (100) to the cluster performance index of the specific cluster.

2. The method (200) according to claim 1, wherein the machine learning algorithm is an unsupervised machine learning algorithm.

3. The method (200) according to claim 2, wherein the machine learning algorithm is one of

   a k-means algorithm,
   a density based spatial clustering of applications with noise,
   an agglomerative clustering, and
   a bisecting k-means algorithm.

4. The method (200) according to any of the preceding claims, wherein the at least one site specific parameter (311, 312, 313, 314) comprises information about at least one of:

   a site height,
   a wind distribution at a site,
   an average air density at a site,
   an average temperature at a site, and
   an average turbulence intensity at a site.

5. The method (200) according to any of the preceding claims, wherein the step of training the machine learning algorithm comprises the step of
   optimizing a cluster size of the plurality of clusters of wind turbines.

6. The method (200) according to any of the preceding claims, further comprising the step of

   evaluating the clusters of wind turbines generated by the machine learning algorithm, and
   repeating the step of training the machine learning algorithm until the clusters of wind turbines generated by the machine learning algorithm satisfy predetermined requirements.

7. The method (200) according to any of the preceding claims, wherein the step of evaluating (S315, S317) the performance of the wind turbine (100) by comparing the wind turbine performance index of the wind turbine to the cluster performance index of the specific cluster comprises the step of:
   determining a variation of the wind turbine performance index of the wind turbine (100) to the cluster performance index of the specific cluster.

8. The method (200) according to claim 7, further comprising the step of:
   generating a signal (S319), in specific a flag or an alarm, if the variation of the wind turbine performance index of the wind turbine (100) to the cluster performance index of the specific cluster is higher than a predetermined threshold value.

9. The method (200) according to claim 8, wherein the predetermined threshold value is a cluster dependent threshold value that is preset for each of the plurality of clusters of wind turbines as a function, in specific as a specific percentage, preferably 5 %, of a cluster performance index of the respective cluster.

10. The method (200) according to any of the preceding claims, further comprising the step of

    acquiring (S301) at least one configuration parameter (301, 302, 303, 304, 305) of each of the plurality of wind turbines for each of the plurality of days,
    training a machine learning algorithm to cluster the plurality of wind turbines into a plurality of clusters of wind turbines with comparable conditions based on at least the at least one configuration parameter (301, 302, 303, 304, 305), each of the plurality of clusters of wind turbines comprising at least two wind turbines,
    clustering (S305) the plurality of wind turbines with the trained machine learning algorithm into a plurality of clusters of wind turbines,
    acquiring (S309) the at least one configuration parameter (301, 302, 303, 304, 305) for the wind turbine,
    identifying a specific cluster from the plurality of clusters with comparable conditions to the wind turbine (100) based on the at least one configuration parameter (301, 302, 303, 304, 305) of the wind turbines comprised in the specific cluster and the at least one configuration parameter (301, 302, 303, 304, 305) of the wind turbine (100).

11. The method (200) according to claim 10, wherein the at least one configuration parameter (301, 302, 303, 304, 305) comprises information about at least one of:

a model type of a tower of the wind turbine,
a model type of at least one rotor blade of the wind turbine,
a control system type of the wind turbine.

12. The method (200) according to any of the preceding claims, wherein the cluster performance index is an annual cluster performance index, in specific, providing information about a mean annual energy production, AEP, of the wind turbines comprised in a cluster, and the wind turbine performance index is an annual wind turbine performance index, in specific, providing information about an AEP of the wind turbine (100).

13. Computer program to be carried out by a computer configured to perform the method (200) according to one of the preceding claims.

14. Training data set for training a machine learning algorithm to cluster a plurality of wind turbines into a plurality of clusters of wind turbines with comparable conditions based on the training dataset, in specific based on at least one site specific parameter, each of the plurality of clusters of wind turbines comprising at least two wind turbines, wherein the training data set comprises data on each of the plurality of wind turbines, in specific data comprising the at least one site specific parameter (311, 312, 313, 314) for each of the plurality of wind turbines.

15. A performance evaluation system for evaluating the performance of a wind turbine (100), comprising:

a first acquisition unit configured to acquire at least one power production parameter (306, 307) and at least one site specific parameter (311, 312, 313, 314) for each of a plurality of wind turbines for each of a plurality of days,
a preparation unit configured to prepare a dataset based on the parameters, acquired by the first acquisition unit,
a training unit configured to train a machine learning algorithm to cluster the plurality of wind turbines into a plurality of clusters of wind turbines with comparable conditions based on the dataset, in specific based on the at least one site specific parameter (311, 312, 313, 314), each of the plurality of clusters of wind turbines comprising at least two wind turbines,
a cluster unit configured to cluster the plurality of wind turbines with the trained machine learning algorithm into a plurality of clusters of wind turbines,
a second acquisition unit configured to acquire the at least one site specific parameter (311, 312, 313, 314) for the wind turbine (100),
an identification unit configured to identify a specific cluster from the plurality of clusters with comparable conditions to the wind turbine (100) based on the at least one site specific parameter (311, 312, 313, 314) of the wind turbines comprised in the specific cluster and the at least one site specific parameter (311, 312, 313, 314) of the wind turbine (100),
a first determination unit configured to determine a cluster performance index of the specific cluster based on the at least one power production parameter (306, 307) of the wind turbines comprised in the specific cluster,
a third acquisition unit configured to acquire the at least one power production parameter (306, 307) of the wind turbine (100),
a second determination unit configured to determine a wind turbine performance index of the wind turbine based on the at least one power production parameter (306, 307) of the wind turbine (100),
an evaluation unit configured to evaluate the performance of the wind turbine (100) by comparing the wind turbine performance index of the wind turbine (100) to the cluster performance index of the specific cluster.

Fig. 1

Fig. 2

Fig. 3

Europäisches
Patentamt

European
Patent Office

Office européen
des brevets

# EUROPEAN SEARCH REPORT

**Application Number**

EP 24 21 9341

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 062 509 A (STATE GRID SHAANXI NEW ENERGY CO LTD) 24 April 2020 (2020-04-24) | 14 | INV.<br>F03D17/00 |
| A | * the whole document * | 1-13,15 | |
| | ----- | | |
| A | US 2022/397097 A1 (FRASER CHRISTOPHER [GB] ET AL) 15 December 2022 (2022-12-15)<br>* paragraph [0001] - paragraph [0034]; figures 1-12 *<br>* paragraph [0049] *<br>* paragraph [0071] - paragraph [0076] *<br>* paragraph [0079] - paragraph [0081]; claims 1,3 *<br>* paragraph [0088] *<br>* paragraph [0096] * | 1-15 | |
| | ----- | | |
| A | US 2018/320658 A1 (HERZOG JAMES [US] ET AL) 8 November 2018 (2018-11-08)<br>* the whole document * | 1-15 | |
| | ----- | | |
| A | US 2021/102525 A1 (EVANS SCOTT CHARLES [US] ET AL) 8 April 2021 (2021-04-08)<br>* the whole document * | 1-15 | TECHNICAL FIELDS SEARCHED (IPC)<br><br>F03D<br>G06N |
| | ----- | | |

The present search report has been drawn up for all claims

| Place of search | Date of completion of the search | Examiner |
|---|---|---|
| The Hague | 28 April 2025 | Herdemann, Claire |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 9341

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2025

| Patent document cited in search report | | Publication date | Patent family member(s) | | Publication date |
|---|---|---|---|---|---|
| CN 111062509 | A | 24-04-2020 | NONE | | |
| US 2022397097 | A1 | 15-12-2022 | EP | 4058855 A1 | 21-09-2022 |
| | | | ES | 2969782 T3 | 22-05-2024 |
| | | | GB | 2585106 A | 30-12-2020 |
| | | | US | 2022397097 A1 | 15-12-2022 |
| | | | WO | 2021094743 A1 | 20-05-2021 |
| US 2018320658 | A1 | 08-11-2018 | US | 2018320658 A1 | 08-11-2018 |
| | | | WO | 2018204524 A1 | 08-11-2018 |
| US 2021102525 | A1 | 08-04-2021 | CN | 112594130 A | 02-04-2021 |
| | | | CN | 114430816 A | 03-05-2022 |
| | | | DK | 3800519 T3 | 26-08-2024 |
| | | | EP | 3800519 A1 | 07-04-2021 |
| | | | EP | 4038462 A1 | 10-08-2022 |
| | | | ES | 2990163 T3 | 29-11-2024 |
| | | | US | 10954919 B1 | 23-03-2021 |
| | | | WO | 2021066867 A1 | 08-04-2021 |

EPO FORM P0459

For more details about this annex : see Official Journal of the European Patent Office, No. 12/82